Europäisches Patentamt

European Patent Office

Office européen des brevets

(19)

(11) **EP 0 968 446 B1**

(12) **FASCICULE DE BREVET EUROPEEN**

(45) Date de publication et mention
de la délivrance du brevet:
**12.12.2001 Bulletin 2001/50**

(21) Numéro de dépôt: **98917193.9**

(22) Date de dépôt: **20.03.1998**

(51) Int Cl.⁷: **G02B 6/12**

(86) Numéro de dépôt international:
**PCT/FR98/00563**

(87) Numéro de publication internationale:
**WO 98/43119 (01.10.1998 Gazette 1998/39)**

(54) **DISPOSITIF DE DEMULTIPLEXAGE DES RAIES SPECTRALES CONTENUES DANS UN SPECTRE OPTIQUE**

VORRICHTUNG ZUM DEMULTIPLEXEN VON IN EINEM OPTISCHEN SPEKTRUM ENTHALTENEN SPEKTRALLINIEN

DEVICE FOR DEMULTIPLEXING LIGHT PATHS CONTAINED IN AN OPTICAL SPECTRUM

(84) Etats contractants désignés:
**DE FR GB IT**

(30) Priorité: **20.03.1997 FR 9703424**

(43) Date de publication de la demande:
**05.01.2000 Bulletin 2000/01**

(73) Titulaire: **COMMISSARIAT A L'ENERGIE
ATOMIQUE**
**75015 Paris (FR)**

(72) Inventeurs:
• **MAGNE, Sylvain**
**F-92320 Chatillon (FR)**
• **FERDINAND, Pierre**
**F-78800 Houilles (FR)**
• **GRAND, Gilles**
**F-38000 Grenoble (FR)**

(74) Mandataire: **Ilgart, Jean-Christophe et al**
**BREVALEX**
**3, rue du Docteur Lancereaux**
**75008 Paris (FR)**

(56) Documents cités:
EP-A- 0 572 169          WO-A-96/36895
WO-A-97/08574          US-A- 4 790 614
US-A- 5 426 297          US-A- 5 457 760

• **MAXWELL G D ET AL: "UV WRITTEN 1.5 UM REFLECTION FILTERS IN SINGLE MODE PLANAR SILICA GUIDES" ELECTRONICS LETTERS, vol. 28, no. 22, 22 octobre 1992, pages 2106-2107, XP000320734 cité dans la demande**

## Description

### DOMAINE TECHNIQUE

La présente invention concerne un dispositif de démultiplexage des raies spectrales contenues dans un spectre optique.

Elle trouve des applications notamment dans le domaine des télécommunications optiques.

L'invention s'applique plus particulièrement aux réseaux (<< networks >>) de capteurs à fibres optiques.

A ce sujet, on se reportera aux documents (1) à (4) qui, comme les autres documents cités par la suite, sont mentionnés à la fin de la présente description.

De tels réseaux de capteurs sont utilisables pour la surveillance de structures dans les domaines suivants : bâtiment, travaux publics, transports, aéronautique et aérospatiale.

### ÉTAT DE LA TECHNIQUE ANTÉRIEURE

On connaît quatre techniques pour réaliser un démultiplexage en optique intégrée : une première technique utilisant un réseau (« grating ») gravé, une deuxième technique utilisant des interféromètres de Mach-Zehnder, une troisième technique utilisant un réseau de phase ou PHASAR (pour PHASe-ARray), et une quatrième technique utilisant des interféromètres de Mach-Zehnder équilibrés ou des coupleurs 100% avec réseau de Bragg photo-inscrit de façon identique sur les deux bras (« ADD-DROP multiplexer »).

La première technique exploite la diffraction de la lumière par un réseau (« grating ») concave (à champ de sortie circulaire ou plan) gravé et blazé à un ordre élevé.

La gravure verticale est possible dans le cas de guides en silice sur silicium et peut atteindre une profondeur de 25 μm.

A ce sujet, on consultera le document (6).

Le composant démultiplexeur consiste alors en une fibre d'entrée connectée à un guide planaire envoyant la lumière en direction d'un réseau de diffraction gravé.

Dans le cas du réseau à champ de sortie circulaire, la lumière incidente et la lumière diffractée, refocalisée à différentes incidences angulaires, sont localisées sur le cercle de Rowland.

Dans le cas du réseau à champ plan (voir le document (6)), les points stigmatiques dispersés en longueur d'onde sont alignés sur une droite orthogonale au faisceau réfléchi.

Comme le réseau fonctionne par réflexion, il est métallisé.

Le profil de gravure du réseau peut être constitué d'un ensemble d'ellipses comme l'enseigne le document (7).

Le faisceau diffracté est refocalisé sur des guides monomodes ayant par exemple un diamètre de mode de 9 μm et un espacement de 16 μm, comme l'enseigne le document (6), ou sur des photodiodes formant une barrette comme l'enseigne le document (5).

Le réseau fonctionne de préférence à un ordre de diffraction élevé (allant de 4 dans le document (6) à 50 dans le document (5)) dans l'intention de réaliser un démultiplexage à haute densité (pour les télécommunications).

La deuxième technique est fondée sur la mise en série de plusieurs interféromètres de type Mach-Zehnder qui sont tous déséquilibrés au niveau de leurs chemins optiques, avec une valeur caractéristique de déséquilibre.

A ce sujet, on consultera le document (8).

Pour un démultiplexeur à quatre voies, on utilise par exemple deux interféromètres, dont les déséquilibres valent respectivement $\Delta L_1$ et $\Delta L_2 = \Delta L_1 + \lambda/_{4N}$, et un troisième interféromètre dont le déséquilibre $\Delta L_3$ vaut $2.\Delta L_1$ (typiquement de l'ordre de 50 μm à 100 μm) afin d'obtenir une séparation entre canaux de 7,5 nm à 1550 nm, N étant l'indice effectif du mode.

La troisième technique utilise un réseau de phase optique (« optical phase-array ») qui est constitué d'un ensemble de guides déphaseurs monomodes parallèles reliant deux guides plans d'entrée et de sortie par des interfaces circulaires.

A ce sujet, on consultera le document (9).

Aux autres interfaces circulaires des guides plans sont reliés des guides d'entrée et des guides de sortie.

La lumière injectée par l'un quelconque des guides d'entrée s'étend dans le guide plan d'entrée et couvre l'ensemble des guides déphaseurs situés à l'interface.

D'un guide déphaseur à un autre, il existe une différence de longueur constante de sorte que les faisceaux lumineux émergeant du guide plan de sortie interfèrent comme s'ils étaient réfléchis par un réseau de diffraction concave incliné.

Le décalage de chemin optique induit par les guides déphaseurs produit le même effet qu'une inclinaison du front d'onde par rapport à l'interface.

Le PHASAR, qui fonctionne par transmission, se comporte ainsi comme un réseau de diffraction concave d'ordre très élevé (environ 50 à 100) et de grande capacité de multiplexage.

A ce sujet, on consultera le document (10).

Plus grand est le nombre de guides déphaseurs, meilleure est la résolution spectrale.

Par exemple, dans le document (11), 60 guides déphaseurs sont utilisés.

Une lame demi-onde peut être insérée au milieu du circuit optique formé par les guides déphaseurs afin d'annuler la dépendance en polarisation de ce circuit.

La quatrième technique utilise des interféromètres de Mach-Zehnder équilibrés ou des coupleurs 100% avec un réseau de Bragg photo-inscrit de façon identique sur les deux bras. La lumière est injectée au port 1 et émise au port 3 (100% de couplage) pour toutes les longueur d'onde distinctes de la longueur d'onde de Bragg ; la lumière à la longueur d'onde de Bragg est réfléchie sélectivement au port 2. A ce sujet, on consultera par exemple le document (29) d'où sont tirées les références numériques précédentes.

Trois sortes de matériaux sont utilisées pour réaliser les composants utilisés dans les quatre techniques précédentes : verre, silice sur silicium et semi-conducteurs de type InP.

En particulier, des réseaux gravés et des PHASARs ont été réalisés en optique intégrée sur du silicium tandis que des démultiplexeurs à interféromètres ont été réalisés en optique intégrée sur du silicium ou sur du verre.

Aucune de ces quatre techniques connues ne permet de déterminer directement les longueurs d'onde de Bragg avec la précision souhaitée.

En outre, ces techniques nécessitent un compromis entre diaphonie (« cross talk ») et espace spectral occupé.

La diaphonie, c'est-à-dire le couplage lumineux entre les sorties, doit être minimisée car elle contribue à fausser les mesures de longueur d'onde.

Typiquement, une diaphonie de -25 dB à - 30 dB est recherchée et l'occupation spectrale est déduite en conséquence.

Dans le cas d'un réseau de diffraction en optique intégrée sur silicium, le couplage lumineux entre les sorties est induit par la diffusion dans le guide (à cause des imperfections de gravure) et par le couplage entre les guides de sortie lorsque ceux-ci sont trop rapprochés.

Entre les centres de deux canaux spectraux adjacents, la diaphonie est typiquement de l'ordre de -20 dB à -35 dB tandis qu'elle n'est plus que de -10 dB à -15 dB à l'intersection des fonctions de transfert correspondant à ces canaux (à la moitié de la période spectrale).

Dans le cas du PHASAR, les caractéristiques de diaphonie et d'espace spectral occupé sont parmi les meilleures.

Typiquement, une diaphonie meilleure que -30 dB est atteinte dans le cas du document (11), pour une occupation spectrale de 0,8 nm et une période de 2 nm, avec 60 guides déphaseurs et un ordre de diffraction égal à 60.

Dans le cas des interféromètres de Mach-Zehnder, la diaphonie dépend de la précision d'ajustement des coupleurs de séparation (coupleurs 3 dB).

A titre d'exemple, dans le document (8) est décrit un démultiplexeur qui est constitué de trois interféromètres formés à partir de coupleurs 3,1 dB (au lieu de coupleurs 3 dB) et qui est caractérisé par une diaphonie d'environ -20 dB.

Dans le document (4) est également proposé un démultiplexeur qui inclut un dispositif de collimation de la lumière à analyser et une série de filtres passe-bande montés en cascade et associés à des photodétecteurs.

Le principal inconvénient de ce démultiplexeur est d'être conçu pour fonctionner en espace libre.

De ce fait, la reproductibilité et la fiabilité des mesures ainsi que la robustesse et l'intégration de ce démultiplexeur sont insuffisantes pour une application aux micro-systèmes.

De plus, la diaphonie minimale qu'il est possible d'obtenir avec ce démultiplexeur dépend de la réflexion des filtres passe-bande utilisés (qui comportent typiquement des dépôts anti-reflets de -20 dB) et dépend aussi fortement de la polarisation de la lumière analysée (les filtres sont orientés à 45°).

Enfin, un tel démultiplexeur ne se prête pas à une fabrication en série compatible avec les besoins du marché des capteurs industriels.

## EXPOSÉ DE L'INVENTION

La présente invention a pour but de remédier aux inconvénients précédents en proposant un dispositif de démultiplexage qui présente une excellente réjection en longueur d'onde, assure une très faible diaphonie (inférieure à -30 dB) et a une grande « flexibilité » de fabrication (car il permet l'ajustement des longueurs d'onde d'accord).

US-A-5 457 760 divulgue un dispositif de démultiplescage en longueur d'onde selon le préambule de la revendication 1.

De façon précise, la présente invention a pour objet un dispositif de démultiplexage en longueur d'onde d'une pluralité N de raies spectrales ($\lambda_1$ à $\lambda_N$) qui forment ensemble un spectre optique et sont chacune susceptibles de fluctuer dans un domaine spectral déterminé, comprenant :

- un séparateur en énergie, ayant une entrée qui est destinée à recevoir le spectre optique, et une pluralité N de sorties qui sont aptes à fournir chacune une fraction de l'énergie lumineuse du spectre optique, et

- une pluralité N de filtres optiques en longueur d'onde dont chacun est relié à une sortie correspondante du séparateur en énergie, et a une bande passante en longueur d'onde qui contient le domaine spectral associé à l'une des raies ($\lambda i$) du spectre optique et filtre donc seulement cette raie ($\lambda i$), chacun des filtres étant adapté pour filtrer une raie ($\lambda i$) différente,

ce dispositif étant caractérisé en ce que chacun des filtres optiques est constitué par un réflecteur de lumière unique sélectif en longueur d'onde, adapté pour réfléchir une seule raie ($\lambda i$) du spectre optique, différente pour chaque réflecteur sélectif, et en ce qu'à chacun de ces réflecteurs sélectifs est associé un moyen pour diriger la raie (λi) ainsi réfléchie dans une direction différente de celle empruntée par la lumière incidente sur ce réflecteur sélectif.

On peut utiliser un séparateur en énergie de type connu par exemple du genre de ceux qui sont commercialisés par la société Corning. Ce séparateur en énergie peut être un ensemble de jonctions séparatrices montées en cascade, c'est-à-dire en arbre (leur montage est arborescent).

Chaque jonction séparatrice peut être multimode mais elle est de préférence monomode notamment lorsque le spectre optique devant être démultiplexé est transporté par une fibre optique monomode, reliée à l'entrée de l'ensemble des jonctions séparatrices.

Ces jonctions séparatrices peuvent être des coupleurs par exemple des coupleurs 3 dB (coupleurs qui sont tels que chacune de leurs deux voies de sorties transporte la moitié de l'énergie lumineuse incidente).

Cependant cela nécessite d'ajuster précisément la longueur de couplage ainsi que l'intervalle entre les deux guides couplés de tels coupleurs en fonction de la longueur d'onde.

C'est pourquoi, dans la présente invention, il est préférable d'utiliser des jonctions séparatrices constituées par des jonctions Y.

Ces jonctions Y présentent l'avantage d'être achromatiques et indépendantes de la polarisation.

Selon un mode de réalisation préféré du dispositif objet de l'invention, le moyen associé à chaque réflecteur sélectif est constitué par un guide d'onde optique destiné à propager la raie réfléchie par ce réflecteur.

Selon un mode de réalisation préféré du dispositif objet de l'invention, le séparateur en énergie et les réflecteurs sélectifs sont intégrés sur un même substrat.

Ce substrat peut être en verre ou en silicium.

De préférence les réflecteurs sélectifs comprennent des réseaux de Bragg (« Bragg gratings »).

Les réseaux de Bragg peuvent être photo-inscrits ou photo-gravés.

De plus, les réseaux de Bragg peuvent être des réseaux à périodes variables (« chirped gratings »).

On peut également utiliser des réseaux à période fixe et de réflectivité maximale (« saturée ») que l'on obtient par exemple par photo-inscription sous une très forte fluence (de façon à élargir leur réponse spectrale).

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un mode de réalisation particulier du dispositif de démultiplexage objet de l'invention,
- la figure 2 illustre schématiquement le principe du démultiplexage spectral au moyen de ce réseau,
- la figure 3 montre un abaque-type de démultiplexage spectral, et
- les figures 4 et 5 illustrent schématiquement deux possibilités de démultiplexage.

## EXPOSÉ DÉTAILLÉ DE MODES DE RÉALISATION PARTICULIERS

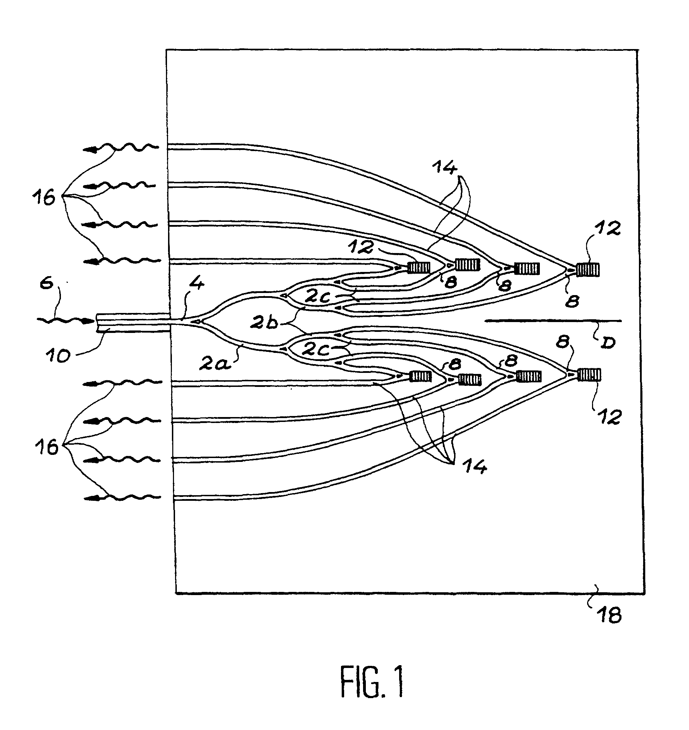

Le dispositif de démultiplexage conforme à l'invention, qui est représenté schématiquement sur la figure 1, est destiné au démultiplexage en longueur d'onde d'une pluralité de raies spectrales, par exemple huit raies spectrales, qui forment un spectre optique et sont susceptibles de fluctuer respectivement dans des domaines spectraux déterminés.

Le dispositif de la figure 1 comprend des jonctions séparatrices en énergie 2a, 2b, 2c qui sont montées en cascade.

L'ensemble de ces jonctions séparatrices possède une entrée 4, qui est destinée à recevoir la lumière 6 contenant les différentes raies spectrales ainsi qu'une pluralité de sorties 8 qui sont aptes à fournir respectivement des fractions de l'énergie lumineuse du spectre optique.

Dans l'exemple représenté, la lumière 6 contenant les différentes raies spectrales est transportée par une fibre optique monomode 10 qui est optiquement couplée à l'entrée 4 de l'ensemble de jonctions séparatrices.

Ces jonctions séparatrices sont choisies monomodes étant donné que cette fibre 10 est monomode.

Dans l'exemple représenté, étant donné que l'on veut séparer huit raies spectrales, on utilise sept jonctions séparatrices montées en cascade, à savoir une jonction référencée 2a, deux jonctions référencées 2b et quatre jonctions référencées 2c.

On dispose ainsi de huit sorties 8 pour l'ensemble de ces jonctions séparatrices.

On utilise de préférence des jonctions Y en tant que jonctions séparatrices.

Une jonction Y est constituée d'un guide d'entrée et de deux guides de sortie faisant un angle (typiquement quelques degrés).

On voit sur la figure 1 que la branche d'entrée de la jonction 2a est optiquement couplée à la fibre optique 10 et constitue l'entrée 4 de l'ensemble de jonctions.

Les deux branches de sortie de cette jonction 2a sont respectivement couplées aux branches d'entrée des deux jonctions 2b.

Chacune des branches de sortie de ces jonctions 2b est elle-même couplée à la branche d'entrée de l'une des quatre jonctions 2c.

Les huit branches sorties de ces jonctions 2c constituent les sorties 8 de l'ensemble de jonctions et sont respectivement couplées à huit réseaux de Bragg 12.

Chacun de ces réseaux de Bragg 12 forme un réflecteur de lumière sélectif en longueur d'onde.

Ce réflecteur de lumière a une bande passante en longueur d'onde qui contient le domaine spectral dans lequel l'une des huit raies spectrales est susceptible de fluctuer.

Ce réseau de Bragg réfléchit donc seulement cette raie.

Chacun des réseaux de Bragg 12 est non seulement couplé, d'un côté, à l'une des sorties de l'ensemble de jonctions 2a, 2b, 2c mais encore couplé, par le même côté, à un guide d'onde optique 14 qui est destiné à propager la lumière 16 correspondant à la raie réfléchie par ce réseau de Bragg.

On voit aussi sur la figure 1 que les jonctions 2a, 2b, 2c et les réseaux de Bragg 12 sont intégrés sur un même substrat plan 18.

Ce substrat 18 est par exemple en verre ou en silicium pour des raisons de commodité de fabrication des jonctions en Y et des réseaux de Bragg.

On précise que les échelles verticale et horizontale de la figure 1 sont différentes.

A titre purement indicatif et nullement limitatif, les réseaux de Bragg 12 s'étendent suivant une même direction D et la dimension de la figure 1 suivant cette direction est de l'ordre de 70 millimètres tandis que, suivant une direction perpendiculaire à la précédente, la dimension est de l'ordre de 5 millimètres.

On précise que l'énergie lumineuse qui parvient à chaque jonction Y par la branche d'entrée de celle-ci se retrouve, pour moitié, dans l'une des branches de sortie de cette jonction et, pour moitié, dans l'autre branche de sortie.

En revanche, l'énergie lumineuse apparaissant dans une branche de sortie d'une jonction Y n'est qu'à moitié transmise à la branche d'entrée de la jonction suivante.

Le reste de cette énergie est transmise au substrat 18.

A ce sujet, on se reportera au document (20)).

Pour le démultiplexeur à huit voies de sortie de la figure 1, le pourcentage de l'énergie lumineuse incidente 6, qui est présent dans chaque guide d'onde optique 14 après réflexion par le réseau de Bragg de démultiplexage 12 correspondant est de l'ordre de 3% de cette énergie incidente, l'atténuation étant ainsi de l'ordre de -15 dB.

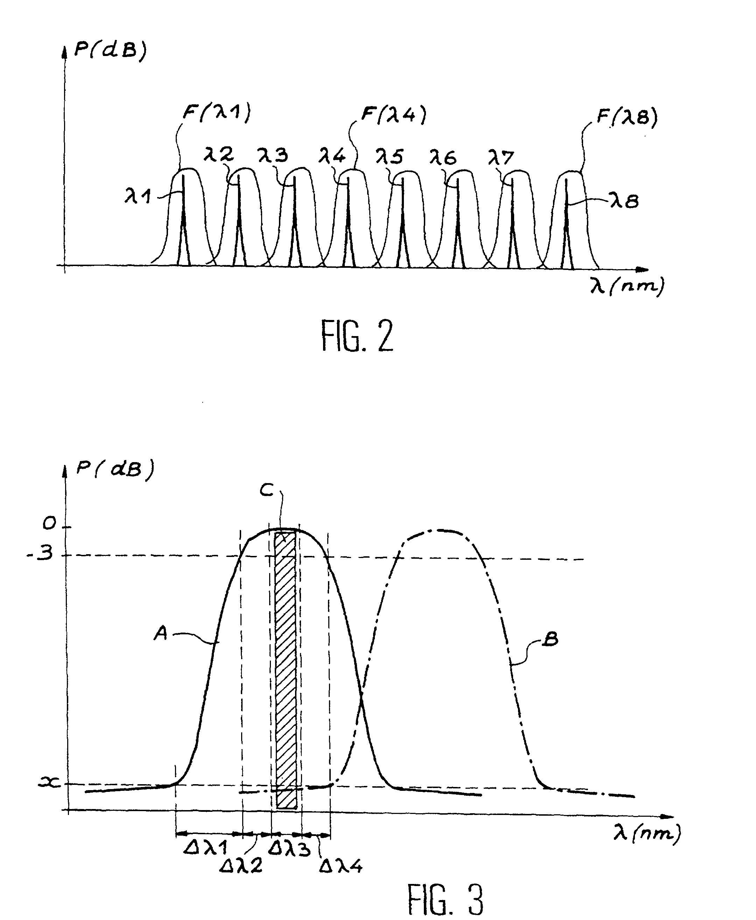

La figure 2 illustre schématiquement le principe de fonctionnement du dispositif de démultiplexage en longueur d'onde de la figure 1.

La lumière 6 que l'on veut analyser (figure 1) contient les huit raies spectrales dont les longueurs d'onde sont respectivement notées $\lambda1$ à $\lambda8$ sur la figure 2.

La largeur spectrale de chacune de ces raies est par exemple de l'ordre de 0,1 nanomètre.

Sur la figure 2, les longueurs d'onde $\lambda$ sont portées en abscisses et exprimées en nanomètres tandis que les puissances lumineuses P sont portées en ordonnées et exprimées en dB.

La lumière que l'on veut démultiplexer est tout d'abord séparée de façon équilibrée, du point de vue de l'énergie lumineuse, par l'ensemble des jonctions Y.

A ce sujet on consultera le document (13).

Chacune des sorties de l'ensemble de jonctions Y aboutit à un réseau de Bragg de démultiplexage qui sert de réflecteur à large bande.

On voit sur la figure 2 les fonctions de transfert spectrale respectives $F(\lambda_i)$ des huit réseaux de Bragg (i=1 à 8), chacun contenant le domaine spectral d'évolution d'une raie du spectre optique de l'énergie lumineuse incidente 6.

Par exemple, la largeur spectrale (à -3 dB) est de l'ordre de 3 nm.

L'intersection des domaines délimités par deux fonctions de transfert spectrales adjacentes est très faible.

Les réseaux de Bragg peuvent être photo-inscrits ou photo-gravés.

Dans le cas de l'utilisation d'une technique de photo-gravure ou de photo-inscription, ces réseaux peuvent être des réseaux à périodes variables (appelés « *chirped gratings* »).

Les réseaux à périodes variables peuvent être considérés comme un ensemble de réseaux de longueurs d'onde voisines qui sont mis en série.

Dans le cas de l'utilisation d'une technique de photo-inscription, les réseaux peuvent être photo-inscrits sous très forte fluence, afin de saturer leur réponse spectrale.

Après réflexion sélective par les réseaux de démultiplexage, chaque raie démultiplexée est envoyée vers un dispositif qui dépend de l'utilisation envisagée pour le dispositif de démultiplexage.

On considère maintenant la fabrication d'un dispositif du genre de celui de la figure 1 sur un substrat en verre.

La technique d'intégration sur un tel substrat est bien adaptée à la réalisation de ce dispositif.

La technique utilisée est celle de l'échange thermique d'ions de type $Na^+$, $K^+$ ou $Cs^+$, éventuellement assisté par un champ électrique.

Le principe de cette technique consiste à échanger des ions alcalins, par exemple des ions sodium $Na^+$, déjà présents dans le verre, avec d'autres ions, du type $Ag^+$ ou $Tl^+$, qui ont pour effet d'augmenter localement l'indice de réfraction du verre.

Cette technique est bien connue et l'on consultera par exemple à son sujet les documents (13) et (14).

Les pertes optiques dues à la connexion fibre-guide et à l'atténuation dans le guide ont été considérablement diminuées grâce à la technique des guides enterrés.

Cette technique consiste à faire diffuser un premier dopant dans le substrat sous champ électrique.

On obtient ainsi des guides qui sont caractérisés par des sections de dopage quasi-circulaires et par un mode conforme à celui d'une fibre monomode (il y a optimisation du recouvrement modal) et qui présentent des atténuations linéiques beaucoup plus faibles du fait de la disparition de la diffusion de surface.

Ces atténuations sont typiquement inférieures à 0,1 dB/cm.

On considère maintenant la fabrication d'un dispositif du genre de celui de la figure 1 sur un substrat en silicium.

Les technologies $SiO_2$ sur Si (couches guidantes en $SiO_2$, SiON et $Si_3N_4$) sont également parfaitement adaptées à la réalisation d'un tel disoositif.

Les techniques utilisées dans ce cas sont fondées sur un dépôt en phase en vapeur (essentiellement un dépôt chimique en phase vapeur) ou un dépôt par hydrolyse à la flamme et une gravure ionique réactive pour la réalisation des motifs.

En ce qui concerne le dépôt en phase vapeur, on consultera les documents (15) et (16).

En ce qui concerne le dépôt par hydrolyse à la flamme, on consultera le document (17).

Considérons l'exemple de la technique de fabrication des guides en silice sur silicium.

A ce sujet on se reportera au document (15).

Dans ce cas, le substrat optique est une couche de silice d'épaisseur suffisante pour isoler la lumière du silicium (épaisseur de 6 μm pour une longueur d'onde de 0,8 μm et de 12 μm pour une longueur d'onde voisine de 1,3 μm ou de 1,55 μm).

La couche guidante est par exemple une couche de silice dopée au phosphore, dont l'épaisseur est de l'ordre de 2 μm à 5 μm suivant la longueur d'onde, et la couche de recouvrement, ou superstrat, est équivalente au substrat, du point de vue de l'indice optique, et a une épaisseur de l'ordre de 6 μm à 10 μm.

Un avantage important de l'optique intégrée sur silicium est la possibilité de graver simultanément des rainures en forme de U ou en forme de V pour le positionnement de fibres optiques monomodes.

A ce sujet on consultera les documents (15), (18) et (19).

Un autre avantage de l'optique intégrée sur silicium réside dans le contrôle de la pente des flancs de gravure pour limiter les réflexions parasites à l'extrémité des guides optiques, réflexions parasites qui sont cause de diaphonie.

On considère maintenant la réalisation des réseaux de Bragg de démultiplexage.

Comme on l'a vu plus haut, ces réseaux peuvent être photo-gravés ou photo-inscrits.

Des réseaux photo-inscrits à périodes variables sont décrits dans les documents (26) et (27).

Considérons la figure 3 sur laquelle sont représentées la fonction de transfert A du réseau de Bragg correspondant à la raie considérée et la fonction de transfert B d'un réseau de Bragg adjacent au précédent.

Sur cet abaque, les longueurs d'onde λ sont portées en abscisses et exprimées en nanomètres et les puissances lumineuses P sont portées en ordonnées et exprimées en dB.

On voit également la zone C d'évolution spectrale de la raie considérée (à titre d'exemple, celle-ci vaut environ 1 nm).

Sur la figure 3, la diaphonie x est de l'ordre de -30 dB à -40 dB et les intervalles de longueur d'onde $\Delta\lambda1$, $\Delta\lambda2$, $\Delta\lambda3$, $\Delta\lambda4$ valent respectivement 3 nm, 1 nm, 1 nm, 1nm.

On a choisi, pour chacune des raies, une largeur spectrale de démultiplexage d'environ 3 nanomètres (définie à -3 dB) prenant en compte une marge de précision de fabrication par photo-inscription, ainsi qu'une dérive thermique de $\pm50°C$ autour de la température ambiante.

L'espace spectral utile est alors d'environ 50%.

La diaphonie dépend de l'adaptation à l'extrémité des guides optiques où sont formés les réseaux de Bragg.

Typiquement, une diaphonie de -40 dB peut être atteinte en donnant, à chaque guide portant un réseau de Bragg, une extrémité en biais par rapport à l'axe de ce réseau, dans le cas de la technologie utilisant le silicium, pour que la lumière qui n'est pas réfléchie sélectivement par les réseaux passe dans le substrat sur lequel ils sont formés.

Dans le cas de la technologie utilisant le verre, pour que la lumière qui n'est pas réfléchie sélectivement passe dans le substrat, on peut y usiner des micro-trous selon un axe non perpendiculaire au guide.

Deux techniques sont utilisables pour réaliser les réseaux de Bragg de démuitiplexage sur le substrat plan.

La première technique est la photogravure qui est décrite dans le document (21).

Cette technique tire profit de la variation d'indice effectif induite le long du guide par gravure mécanique du superstrat très proche du coeur (sur une profondeur de 1 μm à 2 μm).

Une très mince couche de résine photosensible (« photoresist »), d'environ 70 nm d'épaisseur est appliquée au substrat, par exemple par tournette (« spin coating »), afin d'obtenir une bonne résolution de gravure.

Cette couche de résine photosensible est ensuite insolée clans le domaine visible ou proche ultraviolet (par exemple au moyen d'un laser argon à 457,9 nm comme l'enseigne le document (21) par des motifs interférentiels provenant de montages optiques semblables à ceux qui sont employés pour la photo-inscription de réseaux de Bragg.

A ce sujet, on consultera les documents (22) à (28).

Après développement, le verre est gravé par gravure ionique réactive, par exemple au moyen d'un faisceau d'argon dans une atmosphère de trifluorométhane.

Une couche d'alumine d'épaisseur 80 nm et d'indice optique plus élevé que celui de la silice est généralement déposée au dessus de la zone gravée, afin d'augmenter l'efficacité de diffraction du réseau en concentrant le champ du mode fondamental sur la zone gravée.

La deuxième technique est la photo-inscription.

A ce sujet, on consultera les documents (22) à (28).

Dans le cas de la silice dopée au germanium, le procédé de fabrication du verre inclut un recuit qui rend le verre très peu photosensible en supprimant les défauts structurels.

La technique de l'hydrogénation (recuit du verre sous atmosphère d'hydrogène ou mise en pression sous plusieurs mégapascals à température ambiante) ou la technique de la trempe à la flamme permet d'augmenter considérablement la photosensibilité des substrats de verre ou de silice sur silicium.

A ce sujet, on consultera les documents (22), (23) et (24).

La technique préférentielle de photo-inscription des réseaux de Bragg est la technique du masque de phase car elle se prête bien à des inscriptions multiples sur un substrat, selon les méthodes photolithographiques traditionnelles.

La théorie de cette technique est décrite dans de nombreux ouvrages de base (voir par exemple le document (12) p.64).

Pour sa mise en oeuvre, on réalise un masque qui se présente sous la forme d'une plaque de silice fondue (par exemple du genre de celles qui sont commercialisées par la société CORNING sous la référence Corning 7940) sur laquelle ont été gravées des stries.

Ces stries sont périodiques, de période $d = \frac{\lambda_B}{N}$ (où $\lambda_B$ représente la longueur d'onde du réseau et N représente l'indice effectif du mode fondamental guidé) et ont une profondeur telle qu'il y ait une modulation de phase de $\pi$ à la longueur d'onde d'insolation, comme l'enseigne le document (25).

Le faisceau laser d'insolation peut provenir d'un laser à argon ionisé émettant à 488 nm, dont la fréquence a été doublée (à l'intérieur de la cavité laser), afin d'émettre dans l'ultraviolet à 244 nm, ou bien d'un laser YAG-Nd dont la fréquence a été quadruplée, afin d'émettre à 266 nm.

On peut aussi utiliser un laser excimère de type KrF (émettant à 249 nm).

Le faisceau laser est alors principalement diffracté suivant deux ordres (-1 et 1) représentant chacun environ 35% de l'énergie, tandis que l'ordre zéro (qui doit être réduit au minimum en pratique) représente moins de 5% de l'énergie.

Les deux ondes cohérentes provenant de chaque ordre créent alors un schéma d'interférence de période $\Lambda$ qui produit le réseau de longueur d'onde $\lambda_B = 2.N.\Lambda = N.d$ où N est l'indice effectif du mode fondamental guidé.

La période du réseau est indépendante de la longueur d'onde d'insolation (ce qui rend la méthode utilisable avec des sources optiques à faible longueur de cohérence telles qu'un laser excimère KrF).

Les réseaux à périodes variables sont avantageusement obtenus par une succession de plusieurs réseaux de phase à pas constant.

A ce sujet, on consultera le document (26).

De tels masques de phase sont commercialisés (par exemple par les Sociétés Lasiris, Northern Photonics, QPS Tech.) pour réaliser un réseau unique.

Le masque d'insolation du composant est ainsi constitué de plusieurs de ces masques répartis sur les guides à insoler.

Ce masque est positionné sur le composant et l'ensemble (masque et composant) est déplaçable en translation sous le faisceau laser par des moyens de micro-déplacements (moteurs pas-à-pas).

La longueur typique d'un réseau à périodes variables est d'environ 5 mm à 10 mm.

Une plus grande flexibilité d'ajustement en longueur d'onde peut être envisagée en appliquant la méthode d'interférométrie à deux ondes décrite dans les documents (27) et (28).

Selon cette autre méthode, le faisceau peut provenir d'un laser à colorant dont la fréquence est doublée et qui est pompé par un laser excimère de type Xe-Cl.

A ce sujet, on consultera le document (28).

Cette autre méthode a l'avantage de permettre l'ajustement précis des longueurs d'onde d'accord de Bragg sans modifier l'interféromètre, en ajustant très légèrement la longueur d'onde d'insolation (de 230 nm à 255 nm environ).

Revenons à la figure 1. La lumière 6 provenant par exemple de capteurs présents sur une ligne de mesure, et amenée par la fibre optique 10 parcourt un séparateur en énergie qui fournit (à titre d'exemple) 8 signaux de même caractéristique spectrale à chacune de ses sorties. Chaque sortie correspond à un bras d'une jonction séparatrice en longueur d'onde opérant en réflexion et renvoyant l'énergie filtrée 16 dans un guide 14. Sur chacune de ces jonctions est photo-inscrit un réseau de Bragg 12 qui sépare un domaine de longueur d'onde disjoint des autres (voir figure 3) et assure la fonction de démultiplexage spectral pour chacun des capteurs présents sur la ligne de mesure. Cette jonction séparatrice peut être réalisée de deux façons.

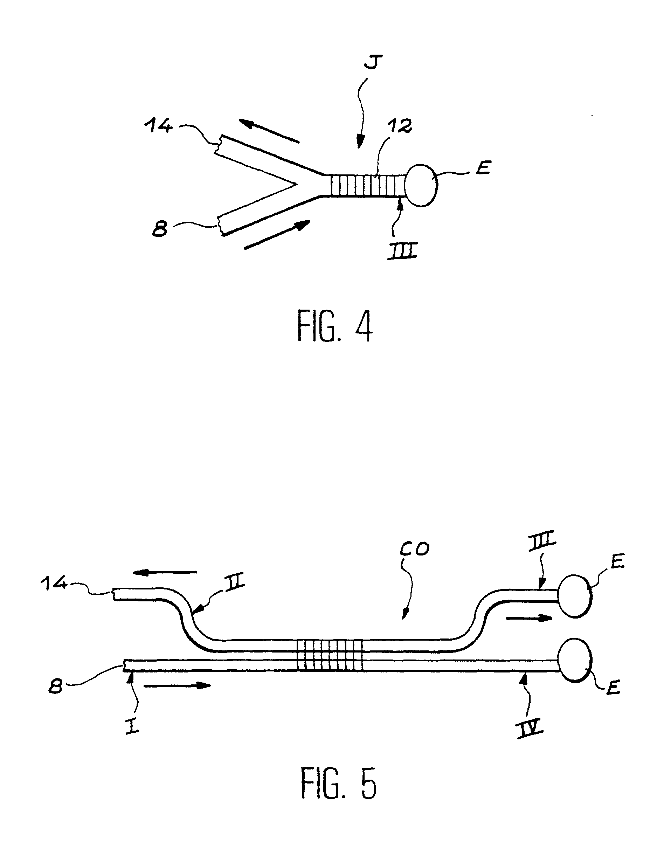

La première solution utilise une jonction Y avec un réseau de Bragg 12 (avantageusement à 100% de réflexion) photo-inscrit sur la branche d'entrée (voir figure 4 où la jontion a la référence J). Cette solution est avantageuse en ce sens que les propriétés de guidage des jonctions Y sont très peu sensibles à la polarisation et à la longueur d'onde de la lumière. Ainsi, un seul masque peut être réalisé pour obtenir le composant ce qui rend la fabrication très flexible car seules les longueurs d'onde des réseaux de Bragg sont ajustées pour réaliser le démultiplexeur. En revanche, cette jonction Y impose une perte optique de 6 dB lors de l'opération de filtrage (c'est-à-dire signal de sortie 8 vers guide 14).

Une deuxième solution permettant de supprimer cet inconvénient consiste à photo-inscrire simultanément chaque réseau de Bragg 12 (avantageusement à 100% de réflexion) sur les deux bras d'un coupleur CO afin de former un coupleur assisté par réseau (voir figure 5). Un tel coupleur est avantageusement choisi de façon à avoir une faible constante de couplage C de sorte qu'un seul battement est observé sur la longueur de couplage $L_c$ (c'est-à-dire $C.L_c = \pi/2$) afin de minimiser sa dépendance en longueur d'onde et en polarisation. Le principe d'un coupleur assisté par réseau est alors le suivant. La longueur de couplage, l'intervalle de couplage et les caractéristiques des guides du coupleur sont choisis afin d'obtenir un transfert total de l'énergie du port I au port couplé III, soit 100%. En présence d'un réseau (opérant en réflexion) photo-inscrit sur les deux bras, les longueurs d'onde réfléchies par le réseau de Bragg parcourent le coupleur en sens inverse et sont réfléchies au port II (comme si elles venaient du port IV symétrique du port II). Il y a alors « extraction » des signaux dont les longueurs d'onde correspondent à la longueur d'onde caractéristique du réseau de Bragg photo-inscrit. Ce comportement est décrit (à titre d'exemple) dans le document (30).

Dans les deux cas (jonction Y ou coupleur 100% assisté par réseau de Bragg), les extrémités des guides III (figure 4) et III et IV (figure 5) sont percées en biais (ce que l'on a symbolisé par des ovales E sur les figures 4 et 5) afin de supprimer les réflexions de Fresnel qui sont sources de diaphonie.

Les documents cités dans la présente description sont les suivants :

(1) W.W. Morey, UNITED TECHNOLOGY CORPORATION (USA) Distributed multiplexed optical fiber Bragg grating sensor arrangement - voir aussi US-A-4,996,419

(2) D.R. Lyons and S.M. Reich, GRUMMAN AEROSPACE CORPORATION (USA) Optical electronic multiplexing reflection sensor system - voir aussi US-A-5,191,458

(3) P. Ferdinand et al, Mine Operating Accurate STABILity Control with Optical fiber sensing and Bragg grating technology : the BRITE-EURAM STABILOS Project, OFS'94, 11-13 oct 1994, Glasgow - voir aussi J. Lightwave Technol., vol.13, n°7, 1995, pp 1303-1313

(4) J.R. Dunphy and K.P. Falkowich, UNITED TECHNOLOGY CORPORATION (USA) Multiplexed Bragg grating sensors - voir aussi US-A-5,426,297

(5) P.C. Clemens, G. Heise, R. Marz, H. Michel, A. Reichelt and H.W. Schneider, 8-Channel optical demultiplexer realized as $SiO_2/Si$ flat-field spectrograph, IEEE Phot. Tech. Lett., vol.6, n°9, 1994, pp. 1109-1111

(6) G. Grand, G. Palumbo, A. Fournier et P. Labeye, Réseau blazé à profil très vertical en silice sur silicium - Application au multiplexage pour communications optiques, Journées Nationales d'Optique Guidée, Besançon, 1994, pp.4-6

(7) P. Gidon, J.P. Jadot et S. Valette, Multiplexeur-démultiplexeur utilisant un réseau concave elliptique et réalisé en optique intégrée EP-A-0275795 - voir aussi US-A-4,786,133

(8) B.H. Verbeek, C.H. Henry, M.A. Olsson, N.A. Orlowsky, R.F. Kazarinov and B.H. Johnson, Integrated four-channel Mach-Zehnder Multi/demultiplexer fabricated with phosphorous doped $SiO_2$ waveguides on Si, J. Of Lightwave Technol., Vol.6, n°6, 1988, pp.1011-1015

(9) H. Takahashi, K. Oda, H. Toba and Y. Inoue, Transmission characteristics of arrayed waveguide NxN wavelength multiplexer, J. Of Lightwave Technol., vol.13, n°3, 1995, pp.447-455

(10) K. Okamoto, K. Moriwaki and S. Suzuki, Fabrication of 64x64 arrayed-waveguide grating multiplexer on silicon, Electron. Lett., vol.31, n°3, 1995, pp. 184-186

(11) V. Delisle, G. Grand, A. Fournier and P. Mottier, « Reduced-size low-crosstalke PECVD silica PHASAR using widened continuous bends », 8th european conference on integrated optics, ECIO'97, Stockholm, 1997

(12) J.W. Goodman, Introduction to Fourier Optics, Mc Graw-hill

(13) S. Honkanen, Ion-exchanged glass waveguide devices for optical communications, Glass integrated optics and optical fiber devices, S. Iraj Najafi Ed., SPIE vol CR53, 1994, pp. 159-179

(14) L. Roβ, Integrated optical components in substrate glasses, Glastech. Ber., vol.62, 1989, pp. 285-297

(15) S. Valette et al., Si-based integrated Optics Technologies, Solid State Tech., 1989, pp. 69-74

(15) S. Valette, S. Renard, J.P. Jadot, P. Gidon and C. Erbeia, Silicon-based Integrated Optics Technology for Optical Sensor Applications, Sensors and Act. A, 1990, pp. 1087-1091

(17) Y. Ohmori, Passive and active silica waveguides on silicon, Proc. ECOC 93, Montreux, pp.19-26

(18) W. Hunziker et al., Self-aligned flip-chip OEIC packaging technologies, Proc. ECOC 93, Montreux, pp. 84-91

(19) G. Grand et al., New method for low-cost and efficient optical connection between single-mode fibres and silica guides, Electron. Lett., Vol.27, n°1, 1991, pp.16-17

(20) M. Izutsu, Y. Nakai and T. Sueta, Operation mechanism of the single-mode optical waveguide Y junction, Opt. Lett. Vol.7, n°3, 1932, pp.136-138

(21) C.J. Rowe, I. Bennion and D.C.J. Reid, High-Reflectivity surface-relief gratings in single-mode optical fibres, IEE Proc. J., Vol.134, n°3, 1987, pp. 197-202

(22) B.J. Ainslie, G.D. Maxwell and D.L. Williams, Photosensitive glass integrated optical devices, Glass integrated optics and optical fiber devices, S. Iraj Najafi ed., SPIE vol CR53, 1994, pp. 235-249

(23) G.D. Maxwell, R. Kashyap and B.J. Ainslie, UV written 1.5 $\mu$m reflection filters in single mode planar silica guides, Electron. Lett., Vol.28, n°22, 1992, p. 2107-2108

(24) K.O. Hill, F. Bilodeau, B. Malo, J. Albert, D.C. Johnson, Y. Hibino, M. Abe and M. Kawachi, Photosensitivity of optical fibre and silica on silica/silicon waveguides, Opt. Lett., vol.18, n°12, 1993, pp. 953-955

(25) K.O. Hill, B. Malo, F. Bilodeau, D.C. Johnson and J. Albert, Bragg gratings fabricated in monomode photosensitive optical fiber by UV exposure through a phase mask, Appl. Phys. Lett., vol.62, n°10, 1993, pp. 1035-1037

(26) R. Kashyap, P.F. McKee, R.J. Campbell and D. L. Williams, novel method of producing all fibre photo-induced chirped gratings, Electron. Lett., vol.30, n°12, 1994, pp.996-997

(27) M.C. Farries, K. Sugden D.C.J. Reid, I. Bennion, A. Molony and M.J. Goodwin, Very broad reflection bandwidth (44 nm) chirped fibre gratings and narrow bandpass filters produced by the use of an amplitude mask, Electron. Lett., Vol.30, n°11, 1994, pp.891-892

(28) G. Meltz, W.W. Morey and W.H. Glenn, Formation of Bragg gratings in optical fibers by a transverse holographic method, Opt. Lett., vol.14, n°15, 1989, pp.823-825

(29) R. Kashyap, G.D. Maxwell and B.J. Ainslie, Laser trimmed four-port bandpass filter fabricated in single-mode photosensitive Ge-doped planar waveguide, IEEE Photon. Technol. Lett., vol.5, 1993, pp.191-194

(30) Ingolf Baumann et al., Compact all-fiber add-drop multiplexer using fiber Bragg gratings, IEEE Phot. Tech. Lett., vol.8, n°10, 1996, pp.1331-1333.

## Revendications

1. Dispositif de démultiplexage en longueur d'onde d'une pluralité N de raies spectrales ($\lambda 1$ à $\lambda_N$) qui forment ensemble un spectre optique (6) et sont chacune susceptibles de fluctuer dans un domaine spectral déterminé, comprenant:

   - un séparateur en énergie (2a, 2b, 2c), ayant une entrée (4) qui est destinée à recevoir le spectre optique(6), et une pluralité N de sorties (8) qui sont aptes à fournir chacune une fraction de l'énergie lumineuse du spectre optique, et
   - une pluralité N de filtres optiques en longueur d'onde (12) dont chacun est relié à une sortie correspondante du séparateur en énergie, et a une bande passante en longueur d'onde qui contient le domaine spectral associé à l'une des raies ($\lambda i$) du spectre optique et filtre donc seulement cette raie ($\lambda i$), chacun des filtres étant adapté pour filtrer une raie ($\lambda i$) différente,

   ce dispositif étant **caractérisé en ce que** chacun des filtres optiques (12) est constitué par un réflecteur de lumiére unique sélectif en longueur d'onde, adapté pour réfléchir une seule raie ($\lambda i$) du spectre optique, différente pour chaque réflecteur sélectif, et **en ce qu'**à chacun de ces réflecteurs sélectifs (12) est associé un moyen (14) pour diriger la raie ($\lambda i$) ainsi réfléchie dans une direction différente de celle empruntée par la lumière incidente sur ce réflecteur sélectif.

2. Dispositif selon la revendication 1, dans lequel le séparateur en énergie est un ensemble de jonctions séparatrices (2a, 2b, 2c) montées en cascade.

3. Dispositif selon la revendication 2, dans lequel chaque jonction séparatrice (2a, 2b, 2c) est monomode.

4. Dispositif selon l'une quelconque des revendications 2 et 3, dans lequel les jonctions séparatrices sont des coupleurs.

5. Dispositif selon l'une quelconque des revendications 2 et 3, dans lequel les jonctions séparatrices sont des jonctions Y.

6. Dispositif selon l'une quelconque des revendications 1 à 5, dans lequel le moyen (14) associé à chaque réflecteur sélectif (12) est constitué par un guide d'onde optique destiné à propager la raie ($\lambda i$) réfléchie par ce réflecteur.

7. Dispositif selon l'une quelconque des revendications 1 à 6, dans lequel le séparateur en énergie et les réflecteurs sélectifs sont intégrés sur un même substrat (18).

8. Dispositif selon la revendication 7, dans lequel le substrat (18) est en verre ou en silicium.

9. Dispositif selon l'une quelconque des revendications 1 à 8, dans lequel les réflecteurs sélectifs comprennent des réseaux de Bragg.

10. Dispositif selon la revendication 9, dans lequel les réseaux de Bragg sont photo-inscrits ou photo-gravés.

11. , Dispositif selon l'une quelconque des revendications 9 et 10, dans lequel les réseaux de Bragg sont des réseaux à périodes variables.

12. Dispositif selon l'une quelconque des revendications 9 et 10, dans lequel les réseaux de Bragg sont des réseaux à période fixe, de réflectivité maximale et de réponse spectrale élargie par photo-inscription à très forte fluence.

**Claims**

1. Wavelength demultiplexing device for a plurality (N) of spectrum lines ($\Lambda_i$ to $\Lambda_N$) which together form an optical spectrum (6) and each being able to fluctuate in a specific spectral region, comprising:

   - an energy separator (2a, 2b, 2c) having an input (4) for receiving the optical spectrum (6) and a plurality (N) of outputs, each of which is able to supply a fraction of the light energy of the optical spectrum (6) and
   - a plurality (N) of wavelength optical filters, each being connected to a corresponding output (8) of the energy separator and having a wavelength pass band containing the spectral range associated with one of the lines ($\Lambda_i$) of the optical spectrum and consequently only filters said lines ($\Lambda_i$), each of the filters (12) being adapted to filter a different line ($\Lambda_i$), said device being **characterized in that** each of the optical filters (12) is constituted by a single, wavelength selective, light reflector able to reflect a single line ($\Lambda_i$) of the optical spectrum and which differs for each selective reflector, and **in that** with each of said selective reflectors is associated a means (14) for directing the thus reflected line ($\Lambda_i$) in a different direction from that taken by the incident light on said selective reflector.

2. Device of claim 1, wherein the energy separator is an assembly of separator junctions (2a, 2b, 2c) assembled in cascade.

3. Device of claim 2, wherein each separator junction (2a, 2b, 2c) is single-mode.

4. Device of either of claims 2 and 3, wherein the separator junctions are couplers.

5. Device of either of claims 2 and 3, wherein the separator junctions are Y junctions.

6. Device of any of claims 1 to 5, wherein the means associated with each selective reflector (12) is constituted by an optical waveguide (14) that is designed to propagate the line ($\Lambda_1$) reflected by said reflector.

7. Device of any of claims 1 to 6, wherein the energy separator and the reflective selectors are integrated in the same substrate (18).

8. Device of claim 7, wherein the substrate (18) is a glass or silicon substrate.

9. Device of any of claims 1 to 8, wherein the selective reflectors comprise Bragg gratings.

10. Device of claim 9, wherein the Bragg gratings are photo-cut or photo-etched.

11. Device of either of claims 9 and 10, wherein the Bragg gratings are chirped gratings.

12. Device of either of claims 9 and 10, wherein the Bragg gratings are chirped gratings with maximum reflectivity and widened spectral response due to very high flux photo-cutting.

**Patentansprüche**

1. Vorrichtung zum Wellenlängen-Demultiplexen einer Vielzahl von N Spektrallinien ($\lambda$1 bis $\lambda_N$), die zusammen ein optisches Spektrum (6) bilden und von denen jede fähig ist, in einem bestimmten Spektralbereich zu fluktuieren, umfassend:

   - einen Energie-Separator (2a, 2b, 2c) mit einem Eingang (4), dazu bestimmt, das optische Spektrum (6) zu empfangen, und eine Vielzahl N von Ausgängen (8), von denen jeder fähig ist, einen Bruchteil der Lichtenergie des optischen Spektrums zu liefern, und
   - eine Vielzahl von N optischen Wellenlängenfiltern (12), von denen jedes mit einem entsprechenden Ausgang des Energie-Separators verbunden ist und ein Wellenlängen-Durchlaßband hat, das den Spektralbereich enthält, der einer der Linien ($\lambda$i)zugeordnet ist, wobei jedes Filter angepasst ist, eine andere Linie ($\lambda$i) zu filtern,

   **dadurch gekennzeichnet,**
   **dass** jedes optische Filter (12) durch einen einzigen wellenlängen-selektiven Reflektor gebildet wird, der derart angepasst ist, dass er nur eine einzige Linie ($\lambda$i) des optischen Spektrums reflektiert, die für jeden selektiven Reflektor verschieden ist, und dadurch, dass jeder dieser selektiven Reflektoren (12) einer Einrichtung (14) zugeordnet ist, die die derart reflektierte Linie ($\lambda$i) in eine andere Richtung als derjenigen lenkt, in der das eintreffende Licht diesen selektiven Reflektor erreicht.

2. Vorrichtung nach Anspruch 1, bei der der Energie-Separator ein System von kaskadenförmig aufgebauten Trennverbindungen bzw. Trennverzweigern (2a, 2b, 2c) ist.

3. Vorrichtung nach Anspruch 2, bei der jede jeder Trennverzweiger (2a, 2b, 2c) ein Einmodenverzweiger ist.

4. Vorrichtung nach einem der Ansprüche 2 und 3, bei der die Trennverzweiger bzw. Trennverbindungen Koppler sind.

5. Vorrichtung nach einem der Ansprüche 2 und 3, bei der die Trennverzweiger Y-Verzweiger sind.

6. Vorrichtung nach einem der Ansprüche 1 bis 5, bei dem die jedem selektiven Reflektor (12) zugeordnete Einrichtung (14) durch einen zur Ausbreitung der durch diesen Reflektor reflektierten Linie ($\lambda$i) bestimmten Lichtwellenleiter gebildet wird.

7. Vorrichtung nach einem der Ansprüche 1 bis 6, bei der der Energie-Separator und die selektiven Reflektoren auf demselben Substrat (18) integriert sind.

8. Vorrichtung nach Anspruch 7, bei der das Substrat (18) aus Glas oder aus Silicium ist.

9. Vorrichtung nach einem de Ansprüche 1 bis 8, bei der die selektiven Reflektoren Bragg-Gitter umfassen.

10. Vorrichtung nach Anspruch 9, bei der die Bragg-Gitter photoinduziert oder photogeätzt sind.

11. Vorrichtung nach einem der Ansprüche 9 und 10, bei der die Bragg-Gitter Gitter mit variablen Perioden sind.

12. Vorrichtung nach einem der Ansprüche 9 und 10, bei der die Bragg-Gitter Gitter mit festen Perioden, mit maximaler Reflektivität und einer durch Photoinduktion mit sehr starker Fluenz vergrößerten Spektralempfindlichkeit sind.

FIG. 1

FIG. 2

FIG. 3

FIG. 4

FIG. 5